Europäisches Patentamt

European Patent Office

Office européen des brevets

(11) Numéro de publication : **0 042 782
B1**

# FASCICULE DE BREVET EUROPÉEN

(45) Date de publication du fascicule du brevet :
26.09.84

(51) Int. Cl.³ : **A 42 B   3/02**

(21) Numéro de dépôt : **81400936.1**

(22) Date de dépôt : **12.06.81**

(54) **Casque de protection à coque injectée en thermoplastique et procédé de fabrication dudit casque.**

(30) Priorité : **24.06.80 FR 8014041**

(43) Date de publication de la demande :
**30.12.81 Bulletin 81/52**

(45) Mention de la délivrance du brevet :
**26.09.84 Bulletin 84/39**

(84) Etats contractants désignés :
**AT BE CH DE FR GB IT LI LU NL SE**

(56) Documents cités :
**EP-A- 0 016 945
CH-A-   359 290
DE-A- 2 245 997
FR-A- 2 294 659
FR-A- 2 444 415
GB-A-   720 687
US-A- 2 413 823
US-A- 2 746 049**

(73) Titulaire : **G.P.A. INTERNATIONAL SA
Zone Industrielle
F-77173 Chevry-Cossigny (FR)**

(72) Inventeur : **Gessalin, Jean
Hameau de Grand Fontaine
F-77131 Touquin (FR)**

(74) Mandataire : **Phélip, Bruno et al
c/o Cabinet Harlé & Phélip 21, rue de la Rochefoucauld
F-75009 Paris (FR)**

## Description

La présente invention concerne un casque de protection pour utilisateur de véhicules et un procédé d'obtention dudit casque.

L'invention s'applique plus particulièrement aux casques comportant une coque injectée en thermoplastique.

La fabrication de coque de casque par injection de thermoplastique offre de nombreux avantages du fait notamment de la précision des pièces obtenues qui dans la plupart des cas, ne nécessitent aucune opération supplémentaire de finition telle que détourage, usinage ou ponçage.

Malheureusement, pour offrir une résistance aux chocs suffisante, ces coques en thermoplastique injecté doivent avoir une forte épaisseur ce qui augmente d'autant leur poids et leur coût.

On connaît par ailleurs des coques de casques de protection réalisées en résine stratifiée armée de fibres de verre ou autres, ces coques stratifiées offrant sous une épaisseur raisonnable une excellente protection contre les chocs, mais leur fabrication nécessite de nombreuses opérations de finition notamment de détourage et d'usinage qui réduisent considérablement les cadences de fabrication et limitent la mécanisation de celle-ci, ce qui augmente les coûts.

Ainsi, le brevet des Etats-Unis d'Amérique US-A-2 413 823 décrit un procédé de fabrication d'objets tels que des casques de protection, par injection d'une matière plastique sur un élément rapporté ou « insert » qui est souple, par exemple sous forme d'un élément fibreux tissé, feutré ou pressé. Cet élément constitue une simple armature de la matière plastique et, étant donné sa souplesse, il n'est pas sous contrainte.

Le but de la présente invention est donc de proposer un casque à coque injectée en thermoplastique qui possède les mêmes qualités de protection qu'une coque stratifiée et traditionnelle mais dont le procédé de fabrication permet d'éliminer la quasi-totalité des opérations de finition exigées habituellement par lesdites coques stratifiées et procure tous les avantages des pièces injectées.

Le casque de protection selon l'invention comporte une coque injectée en thermoplastique munie intérieurement d'un insert en résine stratifiée, ledit insert ayant la forme de la coque elle-même et étant à la fois incrusté dans la masse injectée de ladite coque et soumis à un effet de frette de la part de celle-ci.

Selon l'invention, la coque en thermoplastique injectée est surmoulée sur l'insert intérieur et déborde sur tout le pourtour dudit insert.

Selon l'invention, le procédé de fabrication du casque ci-dessus consiste essentiellement à préfabriquer un insert en résine stratifiée, à appliquer étroitement ledit insert sur la partie mâle d'un moule d'injection de la coque thermoplastique, à disposer de manière connue en soi ladite partie mâle recouverte de l'insert dans le moule d'injection de manière à ménager entre la surface interne dudit moule et l'insert un espace d'épaisseur sensiblement constante, à injecter de la résine thermoplastique à l'intérieur dudit espace de manière à remplir celui-ci et à surmouler la résine sur l'insert, et à démouler l'ensemble après refroidissement et précontrainte de l'insert par la coque thermoplastique ainsi formée extérieurement.

De préférence, l'insert en résine stratifiée appliqué sur la partie mâle du moule d'injection est asujetti à celle-ci de manière à éviter tout déplacement au moment de l'injection.

Dans un mode de réalisation avantageux de l'invention, l'insert est fabriqué par disposition d'un bonnet sur un poinçon, par fixage thermique du bord du bonnet afin qu'il garde sa forme, et par imprégnation du bonnet à l'aide d'une résine. Celle-ci est ensuite polymérisée et démoulée.

L'invention va maintenant être décrite plus en détail en se référant à un mode de réalisation particulier cité à titre d'exemple non limitatif et représenté par les dessins annexés dans lesquels :

la figure 1 est une coupe longitudinale d'une coque thermoplastique renforcée selon l'invention ;

la figure 2 est une coupe transversale de la coque renforcée de la figure 1 ;

la figure 3 est une coupe transversale d'un moule d'injection de la coque thermoplastique représentée sur les figures 1 et 2 ;

la figure 4 est une perspective d'une coquille interne ou « insert » utilisé pour la fabrication d'un casque selon l'invention ;

la figure 5 est une coupe d'un moule utilisé pour la fabrication d'un insert ; et

la figure 6 est une perspective éclatée d'un mannequin utilisé pour la fabrication d'un insert.

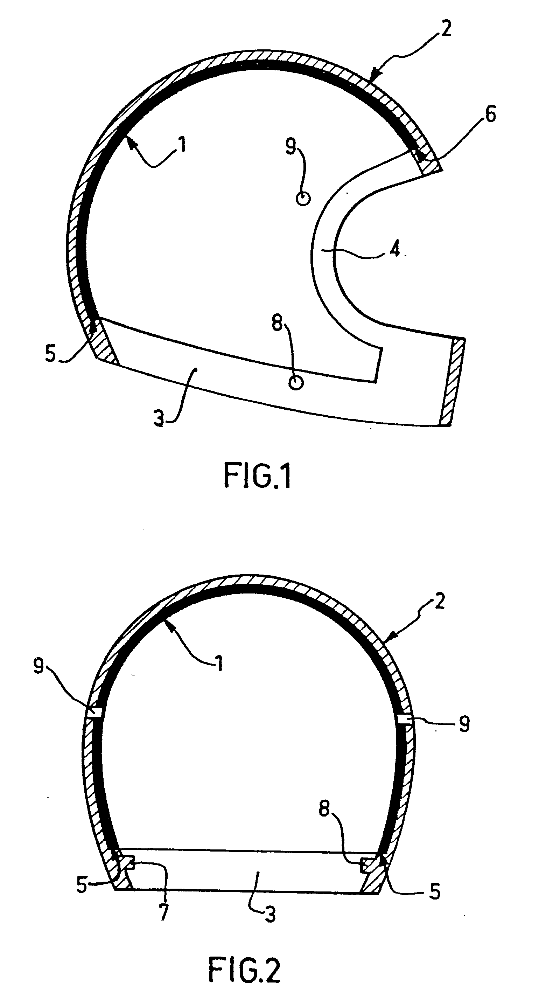

Telle que représentée sur les figures 1 et 2, la coque du casque de protection selon l'invention a une structure composite stratifiée et elle est essentiellement constituée par une coquille interne en résine stratifiée 1 et une coquille externe 2 en thermoplastique surmoulée par injection sur la coquille interne 1 formant un insert dans la coque stratifiée ainsi réalisée.

La coquille interne ou insert 1 en résine stratifiée peut être armée de fibres de verre ou de toute autre fibre et réalisée notamment à l'aide d'une toile forte recouverte de résine. La coquille interne ou insert 1 a des dimensions plus petites que celles de la coquille externe 2 et cette dernière comporte des parties débordantes 3 et 4 respectivement à la partie basse du casque et en bordure de l'ouverture frontale de celui-ci. La coquille interne ou insert 1 est incrustée dans la masse injectée de la coquille externe 2 et les parties débordantes 3 et 4 de ladite coquille externe 2 forment sur la totalité du pourtour de l'insert 1 des épaulements de butée respectivement 5 et 6 qui retiennent par encastrement l'insert 1 à l'intérieur de la coquille 2.

Outre le fait que le surmoulage de la coquille externe 2 en thermoplastique sur la coquille interne 1 réalise un collage des deux coquilles l'une sur l'autre, la liaison entre celles-ci est encore améliorée par le fait que le thermoplastique injecté se rétracte en se refroidissant ce qui engendre un effet de frette sur l'insert intérieur 1. Cet effet de frette de la coquille externe 2 sur la coquille interne 1 engendre une précontrainte dans cette dernière, laquelle est emprisonnée sur ses bords par les épaulements périphériques 5 et 6 des parties débordantes 3 et 4. La précontrainte engendrée dans la coquille interne 1 contribue à rigidifier aussi bien ladite coquille que l'ensemble de la coque stratifiée.

La coquille externe 2 en thermoplastique comporte d'un seul tenant venu d'injection des bossages latéraux 7 et 8 destinés notamment à la fixation par exemple d'un mentonnet, d'une jugulaire ou d'une visière. Des trous 9 venus également de moulage peuvent être prévus dans les deux coquilles 1 et 2 emboîtées, lesdits trous servant par exemple à l'articulation de la visière du casque (figure 2).

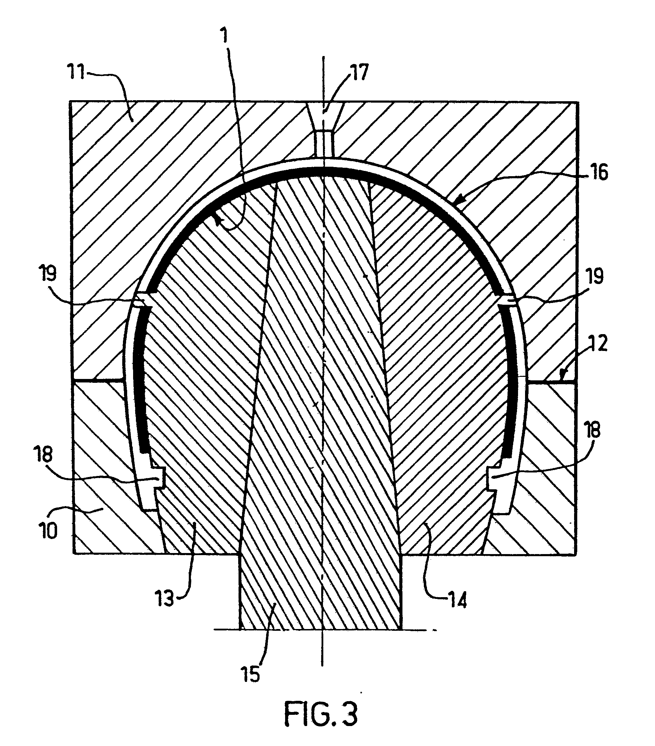

La coque renforcée décrite ci-dessus est réalisée par injection dans un moule tel que représenté en coupe transversale sur la figure 3.

Ce moule comporte une matrice en deux parties 10 et 11 réunies par un plan de joint 12 et un poinçon composé de deux parties latérales 13 et 14 et d'une partie centrale en forme de coin 15. Lorsque des différentes parties du poinçon et de la matrice sont réunies en service, les surfaces convexe et concave respectives sont complémentaires et laissent subsister entre elles un espace intercalaire 16 destiné à loger l'insert 1 de la coque et à contenir la résine thermoplastique surmoulée sur celle-ci. La partie supérieure 11 de la matrice comporte en son centre un canal d'injection 17 du thermoplastique tandis que les parties latérales 13 et 14 du poinçon comportent des évidements 18 destinés à former les parties en relief en saillie à l'intérieur de la coque 2, lesdites parties latérales 13 et 14 comportant en outre des têtons 19 servant à la fois à immobiliser l'insert 1 sur le poinçon et également à ménager dans la coque injectée les trous d'articulation 9 de la visière.

Avant de décrire l'utilisation du moule ci-dessus, on considère la fabrication de la coquille interne ou insert 1, étant donné que cet insert, qui peut être fabriqué par un procédé classique, est placé initialement dans le moule.

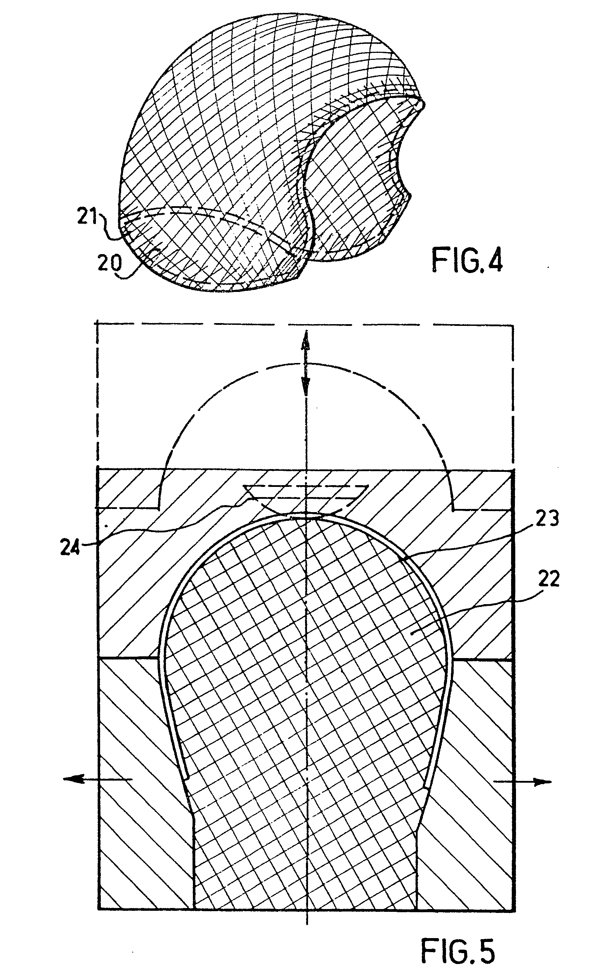

L'insert est avantageusement formé d'une armature textile imprégnée d'une résine thermodurcissable (telle qu'une résine polyester, époxyde, etc.). L'armature textile est avantageusement d'une seule pièce, notamment sous forme d'un bonnet de jersey tel que représenté sur la figure 4 de manière qu'il soit déjà en forme. La nature du fil utilisé pour la fabrication du bonnet dépend des caractéristiques mécaniques voulues. Il peut s'agir de fibres de verre, d'« Aramide », de carbone, etc. Il est avantageux que ce bonnet reproduise la forme voulue pour l'insert. On constate que, lorsqu'un tel bonnet est placé sur le poinçon d'un moule par exemple, ses bords ont tendance à se rouler. Il est donc avantageux que le bord 20 du bonnet soit confectionné par un fil thermoplastique, par exemple de polyamide. Lorsque le bonnet est placé sur le poinçon, une ligne de soudure 21 (figure 4) est formée, par chauffage, aux ultrasons ou à haute fréquence, afin que les fils de la lisière se soudent et constituent une ossature semi-rigide empêchant l'enroulement de la base du bonnet sur elle-même. Le bonnet ainsi traité garde sans difficulté sa forme lorsqu'il est placé sur le poinçon du moule.

On considère maintenant un autre procédé de réalisation d'insert. La figure 5 représente un autre moule de fabrication de l'insert et qui est très semblable à celui qui est utilisé pour le surmoulage de matière thermoplastique, comme décrit précédemment. Il faut cependant noter que l'empreinte 23 de la matrice correspond aux dimensions extérieures de l'insert. Le moule n'a pas d'orifice d'injection correspondant à celui qui porte la référence 17 sur la figure 3. Le poinçon est monobloc. Le moule peut être chauffé à une température réglée correspondant à la température de polymérisation de la résine.

Le moule est placé sur une presse verticale. Avant sa fermeture, la dose nécessaire de résine, par exemple placée dans une coupelle 24 de tissu de verre ou autre, est placée sur le sommet du poinçon. Lors de la fermeture du moule, la résine se répand sur le bonnet et l'imprègne alors que la coupelle textile s'intègre à la pièce. Il s'agit bien entendu d'un simple exemple d'imprégnation mais on peut aussi utiliser les procédés bien connus dans la technique.

L'insert peut être facilement retiré du poinçon monobloc car, lors du démoulage, il est encore souple et déformable car il est encore relativement chaud.

Ces procédés de fabrication de l'insert nécessitent un faible temps de contact. Ils donnent d'excellentes caractéristiques mécaniques étant donné qu'ils ne nécessitent aucune superposition et aucun raccordement de tissu. La polymérisation peut être bien maîtrisée par réglage de la température et de la durée, et il n'apparaît pas de bulle. L'épaisseur obtenue est toujours la même et cette caractéristique est très importante pour l'obtention ultérieure d'un surmoulage fiable de la matière thermoplastique. La forme obtenue peut être en contact parfait avec le poinçon du moule de surmoulage. On obtient même un bon état de surface extérieure qui facilite l'opération ultérieure de surmoulage.

En outre, on note que, pour un même poids de textile, une armature en jersey donne de meilleures caractéristiques mécaniques qu'une armature tissée.

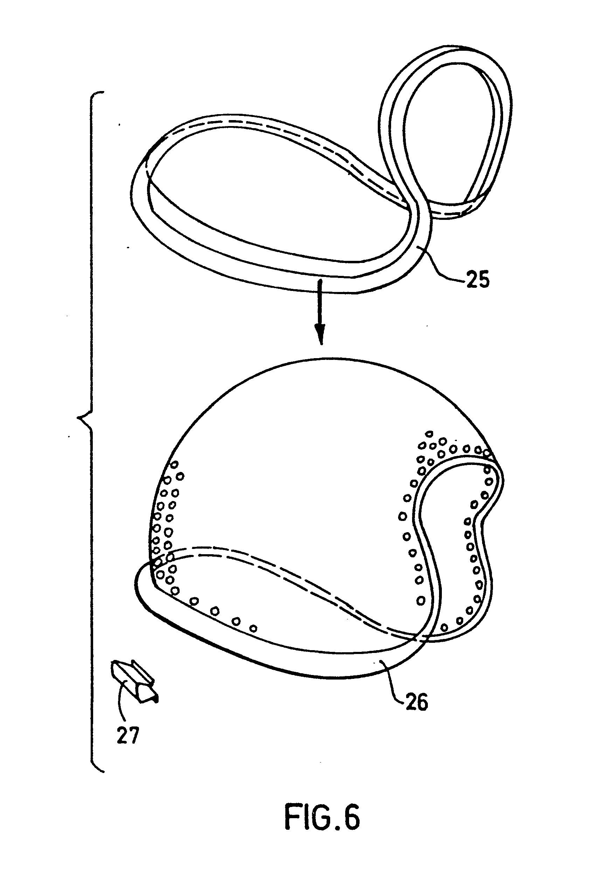

L'insert peut cependant être préparé par mise en œuvre d'un procédé plus simple. Comme représenté sur la figure 6, on peut utiliser un mannequin en forme ayant une coquille rigide correspondant à la forme du poinçon 22 du moule de l'insert. Cette coquille est ajourée et a un rebord 26. Un masque 25 peut venir s'emboîter sur le rebord 26 sur lequel il peut être maintenu par des pinces 27.

Lors de la fabrication de l'insert, un morceau de jersey découpé à plat est disposé sur le mannequin. Comme le jersey est un tricot, il est très déformable et prend la configuration du mannequin sans former de pli. Il est alors maintenu par mise en place du masque 25 et des pinces 27.

Le jersey porté par le mannequin est alors aspergé d'une résine émulsionnée dans l'eau ou immergé dans un tel bain. Après passage à l'étuve, le jersey garde suffisamment sa forme pour pouvoir être utilisé directement. Bien entendu, les parties qui débordent sont découpées afin que la pièce corresponde aux dimensions voulues.

La préforme ainsi obtenue peut être placée sur le poinçon 22 (figure 5) du moule d'insert.

La résine émulsionnée utilisée pour la rigidification du jersey peut être une émulsion de résine polyester dans l'eau, assurant un ensimage des fils sans combler les espaces entre ceux-ci si bien que, lors de la fabrication de l'insert, la résine utilisée à ce moment peut bien imprégner le jersey.

On considère maintenant la fabrication de la coque renforcée avec le moule décrit en référence à la figure 3.

L'insert 1, correspondant à la forme définitive de la coque à fabriquer, est monté sur le poinçon du moule d'injection, le montage étant réalisé par introduction initiale des deux parties latérales 13 et 14 dans l'insert 1 et par engagement des têtons 19 dans des trous préalablement percés par ledit insert, puis par enfoncement de la partie centrale 15 en forme de coin entre ces deux parties latérales 13, 14. Pour obtenir un bon résultat, il est nécessaire que l'insert épouse parfaitement le poinçon du moule afin que le thermoplastique injecté ne puisse s'insérer entre le poinçon et l'insert. Bien entendu, ledit insert devra être d'une épaisseur sensiblement constante de telle sorte que l'espace libre laissé à l'intérieur du moule pour que l'injection de thermoplastique soit également d'épaisseur sensiblement constante. Enfin, l'insert doit avoir un état de surface externe qui permet un parfait accrochage mécanique du thermoplastique injecté sans pour autant gêner l'écoulement dudit thermoplastique lors de son introduction dans le moule.

L'ensemble formé par le poinçon recouvert par l'insert 1 est ensuite introduit dans la cavité interne de la partie 11 du moule d'injection puis la partie 10 dudit moule est montée à son tour de manière à s'appliquer parfaitement sur la partie 11 le long du plan de joint 12 et également à la base du poinçon de manière à assurer une bonne étanchéité.

Une résine de thermoplastique liquide est ensuite injectée à travers le canal 17 dans l'espace intercalaire 16 subsistant entre l'insert 1 et la paroi complémentaire concave de la cavité du moule.

Le thermoplastique injecté est surmoulé sur l'insert 1 et en se refroidissant, son retrait assure le frettage dudit insert.

Après durcissement du thermoplastique dans le moule, on retire la partie 10 de la matrice puis on sort hors de la cavité de la partie 11 de celle-ci l'ensemble constitué par le poinçon, l'insert 1 et la coquille thermoplastique surmoulée sur celui-ci. Il suffit ensuite de retirer la partie centrale en forme de coin 15 du poinçon pour permettre le rapprochement des deux parties latérales 13 et 14 et leur extraction hors de la coque thermoplastique renforcée réalisée.

L'insert étant conçu de telle sorte que lorsqu'il est placé dans la coque son bord est en retrait de celui de la coque définitive, il se trouve incrusté dans la masse injectée et son contour vient en butée sur la résine thermoplastique, si bien que lorsque celle-ci se refroidit et amorce un certain retrait, un effet d'arc-boutement se produit sur l'insert qui est fortement appliqué contre la face interne concave de la coquille extérieure 2 du casque, cet effet d'arc-boutement assurant le frettage de l'insert à l'intérieur de ladite coquille thermoplastique.

Du fait de la précontrainte ainsi introduite dans les éléments de cette coque, celle-ci possède des qualités de protection supérieures à une coque stratifiée traditionnelle dont les composants n'exercent aucune action de frettage entre eux. En outre, la coque selon l'invention autorise la mise en œuvre du procédé décrit précédemment grâce auquel une fabrication industrielle avec mécanisation des opérations devient possible, ce qui assure à la fois une réduction considérable des coûts de fabrication du fait notamment de la suppression des opérations de finition et également une régularité et une constance de qualité exceptionnelles grâce notamment à la liaison parfaite assurée entre l'insert et la coquille externe.

Bien entendu, la portée de l'invention n'est pas limitée au seul mode de réalisation décrit ci-dessus à titre d'exemple non limitatif mais elle couvre également toute variante qui ne différerait que par des détails.

**Revendications**

1. Casque de protection, notamment pour utilisateur de véhicules, comportant une coque injectée en thermoplastique munie intérieurement d'un insert en résine stratifiée ayant la forme de la coque elle-même, caractérisé en ce que la coque injectée est formée d'un thermoplastique durci assurant une précontrainte de l'insert (1) incrusté dans la masse injectée de la coque (2), par un effet de frette dû au retrait du thermoplastique pendant son refroidissement après injection.

2. Casque selon la revendication 1, caractérisé en ce que la coque (2) en thermoplastique est surmoulée sur l'insert (1) intérieur et comporte des parties (3) et (4) débordantes sur tout le pourtour dudit insert.

3. Casque selon l'une des revendications 1 et 2, caractérisé en ce que la coque thermoplastique externe (2) comporte intérieurement, le long de son bord, des épaulements de butée (5, 6) arc-boutés contre le pourtour de l'insert (1) qu'ils retiennent à l'intérieur de la coque par encastrement.

4. Procédé de fabrication d'un casque selon l'une quelconque des revendications 1 à 3, consistant
— à préfabriquer un insert en résine stratifiée,
— à appliquer étroitement ledit insert sur la partie mâle d'un moule d'injection de la coque thermoplastique,
— à disposer ladite partie mâle recouverte de l'insert dans le moule d'injection de manière à ménager entre la surface interne dudit moule et l'insert un espace d'épaisseur sensiblement constante, caractérisé en ce qu'il consiste de plus
— à injecter de la résine thermoplastique durcissable à l'intérieur dudit espace de manière à remplir celui-ci et à surmouler la résine sur l'insert, et
— à démouler l'ensemble après refroidissement et précontrainte de l'insert par la coque thermoplastique durcissable ainsi formée extérieurement.

5. Procédé selon la revendication 4, caractérisé en ce qu'on assujettit l'insert sur la partie mâle du moule d'injection avant de disposer l'ensemble dans ledit moule et d'effectuer le surmoulage.

6. Procédé selon l'une des revendications 4 et 5, caractérisé en ce que l'insert est fabriqué par disposition d'un bonnet sur un poinçon, par fixage thermique du bord du bonnet afin qu'il garde sa forme, et par imprégnation du bonnet par une résine.

## Claims

1. Protective helmet, particularly for a vehicle user, comprising a shell made of an injection moulded thermoplastic material and equipped internally with an insert of laminated resin having the shape of the shell itself, characterised in that the injection moulded shell is formed by a hardened thermoplastic material providing a prestressing of the insert (1) embedded in the injection moulded mass of the shell (2), by a binding effect due to the shrinkage of the thermoplastic material during its cooling after injection moulding.

2. Helmet according to Claim 1, characterised in that the shell (2) made of a thermoplastic material is overmoulded over the inner insert (1) and comprises parts (3) and (4) projecting over the entire periphery of the said insert.

3. Helmet according to either of Claims 1 and 2, characterised in that the outer thermoplastic shell (2) comprises internally, along its rim, shoulders for abutment (5, 6) braced against the periphery of the insert (1) which they retain by fitting inside the shell.

4. Process for the manufacture of a helmet according to any one of Claims 1 to 3, consisting
— in prefabricating an insert made of laminated resin,
— in applying the said insert tightly over the male part of an injection mould for the thermoplastic shell,
— in arranging the said male part covered with the insert in the injection mould so as to provide between the inner surface of the said mould and the insert a space of substantially constant thickness, characterised in that it additionally consists in
— injecting hardenable thermoplastic resin inside the said space so as to fill the latter and to overmould the resin on the insert, and
— in demoulding the assembly after cooling and prestressing of the insert by the hardenable thermoplasic shell thus formed externally.

5. Process according to Claim 4, characterised in that the insert is fastened on the male part of the injection mould before the assembly is arranged in the said mould and the overmoulding is carried out.

6. Process according to either of Claims 4 and 5, characterised in that the insert is manufactured by arranging a cap over a die, by fixing the rim of the cap by heat so that it keeps it shape, and by impregnating the cap with a resin.

## Ansprüche

1. Schutzhelm, insbesondere für Benutzer von Fahrzeugen, mit einer aus thermoplastischem Kunststoff gespritzten Schale, die innen mit einem Einsatz aus verstärktem Harz versehen ist, der die Form der Schale aufweist, dadurch gekennzeichnet, daß die gespritzte Schale (2) aus einem ausgehärteten thermoplastischen Kunststoff gebildet ist, der eine Vorspannung des Einsatzes (1) sichert, der mit der Masse der gespritzten Schale (2) durch eine Schrumpfungswirkung gemäß des Schwindens des thermoplastischen Kunststoffes während dessen Abkühlung nach dem Spritzen verbunden ist.

2. Schutzhelm nach Anspruch 1, dadurch gekennzeichnet, daß die thermoplastische Schale (2) auf dem inneren Einsatz (1) abgeformt ist und Teile (3, 4) aufweist, die auf dem gesamten Umfang von dem Einsatz hinausgehen.

3. Schutzhelm nach einem der Ansprüche 1 und 2, dadurch gekennzeichnet, daß die äußere thermoplastische Schale (2) innen auf der Länge ihres Randes Anschlagschultern (5, 6) umfaßt, die bogenförmig gegenüber dem Umfang des Einsatzes (1) verlaufen, den sie am Innern der Schale durch Einspannung festhalten.

4. Verfahren zur Herstellung eines Schutzhelmes nach einem der Ansprüche 1 bis 3, bei dem
— ein Einsatz aus verstärktem Harz vorgefertigt wird,
— der Einsatz auf den Kernteil der Spritzform für die thermoplastische Schale eng angelegt wird,

— und der mit dem Einsatz bedeckte Kernteil derart in die Spritzform eingebracht wird, um zwischen der Innenfläche der genannten Form und dem Einsatz einen Raum von einer praktisch, konstanten Dicke zu schaffen, dadurch gekennzeichnet,

— daß ein aushärtbares thermoplastisches Harz in das Innere des genannten Raumes gespritzt wird, um diesen zu füllen und um das Harz auf dem Einsatz abzuformen,

— und daß das Gesamte nach dem Abkühlen und dem Vorspannen des Einsatzes durch die so äußerlich gebildete, aushärtbare thermoplastische Schale entformt wird.

5. Verfahren nach Anspruch 4, dadurch gekennzeichnet, daß der Einsatz auf dem Kernteil der Spritzform vor dem Anordnen dieser Gruppe in der Spritzform und dem Durchführen des Abgusses befestigt wird.

6. Verfahren nach einem der Ansprüche 4 und 5, dadurch gekennzeichnet, daß der Einsatz durch Anordnen einer Haube auf einem Dorn (Vorform), durch thermische Befestigung des Randes der Haube, damit sie ihre Form behält, und durch Imprägnierung der Haube mittels eines Harzes hergestellt wird.

**FIG.1**

**FIG.2**

FIG.3

FIG.4

FIG.5

3

FIG.6